# FASCICULE DE BREVET EUROPEEN

(11) **EP 2 174 001 B1**
(45) Date de publication et mention de la délivrance du brevet: **14.12.2016**
(21) Numéro de dépôt: 08826872.7
(22) Date de dépôt: 23.07.2008
(51) Int. Cl.: F03B 11/04, F03B 11/00, F03B 3/12, F03B 1/04

(54) **MACHINE HYDRAULIQUE COMPRENANT DES MOYENS D'INJECTION D'UN ÉCOULEMENT PRÉLEVÉ D'UN ÉCOULEMENT PRINCIPAL**
HYDRAULISCHE MASCHINE MIT MITTEL ZUR INJEKTION EINES AUS EINEM HAUPTFLUSS GEZOGENEN FLUSSES
HYDRAULIC MACHINE INCLUDING MEANS FOR INJECTING A FLOW DRAWN FROM A MAIN FLOW

(30) Priorité: 23.07.2007 FR 0705332
(43) Date de publication de la demande: 14.04.2010
(73) Titulaire: ALSTOM Renewable Technologies, 38100 Grenoble (FR)
(72) Inventeur: MAZZOUJI, Farid, 38210 Vourey (FR); TRAVERSAZ, Monique, 38041 GRENOBLE CEDEX 9 (FR)
(74) Mandataire: Brannen, Joseph Waclaw
(86) Numéro de dépôt international: PCT/FR2008/051384
(87) Numéro de publication internationale: WO 2009/016314

(56) Documents cités:
- DE-C- 920 234
- JP-A- 2005 171 828
- US-A- 1 942 995
- US-B1- 6 524 063

## Description

La présente invention concerne une machine hydraulique de type Francis du type traversée par un écoulement principal d'eau, comprenant une roue d'une turbine, au voisinage duquel se forme au moins une zone tourbillonnaire ou une zone de pression réduite ou une zone de cavitation, la roue étant comprenant des aubes disposées entre un plafond et une ceinture, la machine comprenant des moyens d'injection d'un écoulement prélevé dudit écoulement principal, non modifié par rapport à l'écoulement principal, dans ladite zone tourbillonnaire ou de pression réduite ou de cavitation de sorte à modifier localement l'écoulement principal ou augmenter la pression dans cette zone.

Une telle machine est utilisée, par exemple dans une usine de production d'hydro-électricité. La machine est installée au fil de l'eau ou est alimentée en eau à partir d'un réservoir dans lequel se déverse un ou plusieurs cours d'eau.

Dans ces machines hydrauliques, il existe des zones dans lesquelles l'écoulement principal traversant la machine est perturbé et forme des tourbillons ou présente une pression réduite ou des zones de cavitations, du fait de la configuration de la machine. De telles zones perturbent les performances générales de la machine hydraulique car elles réduisent l'efficacité d'action de l'écoulement principal dans la machine hydraulique ou occasionnent des problèmes de fonctionnement de la machine hydraulique.

Le document US-1 942 995 décrit une machine hydraulique du type précité, permettant d'injecter un écoulement prélevé de l'écoulement principal dans la zone de cavitation se formant le long des aubes de la roue de la turbine.

Cependant, une telle machine ne permet pas d'augmenter de façon efficace la pression dans les espaces s'étendant entre les aubes où se forment des zones de pression réduite ou de supprimer les zones tourbillonnaires se formant également entre les aubes.

L'un des buts de l'invention est de pallier ces inconvénients en proposant une machine hydraulique permettant de supprimer, de façon simple, à la fois les zones tourbillonnaires, de pression réduite et de cavitation.

A cet effet, l'invention concerne une machine hydraulique du type précité, dans laquelle lesdits moyens injectant l'écoulement prélevé depuis le plafond ou depuis la ceinture au moyen d'ouvertures pratiquées dans ledit plafond ou dans ladite ceinture.

L'injection d'un écoulement prélevé depuis le plafond ou depuis la ceinture permet de combler efficacement le manque de performance de l'action de l'écoulement principal dans ces zones, ce qui améliore les performances et le comportement de la machine hydraulique et de choisir précisément les endroits où l'écoulement prélevé doit être injecté pour supprimer les zones de cavitation et les zones de pression réduite ou les zones tourbillonaires.

Selon d'autres caractéristiques de la machine hydraulique :
- les moyens d'injection comprennent au moins une conduite comprenant une entrée prélevant un écoulement de l'écoulement principal en amont de la roue et une sortie débouchant dans la zone tourbillonnaire ou de pression réduite ou de cavitation,
- les moyens d'injection comprennent une soupape disposée dans le trajet de l'écoulement prélevé, ladite soupape étant mobile entre une position ouverte dans laquelle elle laisse passer l'écoulement prélevé de l'écoulement principal et une position fermée dans laquelle elle empêche le passage de l'écoulement prélevé,
- le mouvement de la soupape est commandé par des moyens de commande.
- les ouvertures pratiquées dans le plafond ou dans la ceinture débouchent dans les espaces entre les aubes,
- l'écoulement prélevé passe par des ouvertures pratiquées dans le plafond ou la ceinture en regard d'aubes de la roue et est injecté sur le profil desdites aubes par des orifices ménagés dans une paroi latérale desdites aubes au voisinage de l'extrémité amont et/ou de l'extrémité aval desdites aubes,
- l'écoulement prélevé passe par des ouvertures pratiquées dans le plafond ou la ceinture en regard d'aubes de la roue et est injecté dans l'extrémité aval des aubes.

D'autres aspects et avantages de l'invention apparaîtront au cours de la description qui suit, donnée à titre d'exemple et faite en référence aux dessins annexés dans lesquels :
- la Fig. 1 est une représentation schématique partielle en coupe d'une turbine Francis selon l'invention,
- la Fig. 2 est une représentation schématique vue de dessus de la roue de turbine Francis de la Fig. 1.

L'invention décrite ci-dessous s'applique à des machines hydrauliques du type turbine Francis. Cette machine étant connue, elles n'est pas décrites en détail dans la présente description. L'invention s'applique également à d'autres types de machines hydrauliques dans lesquelles des problèmes de formation de zones tourbillonnaires, de pression réduite ou de cavitation se posent.

Dans la description, les termes « amont » et « aval » sont définis par rapport au sens d'écoulement de l'écoulement principal E traversant la machine hydraulique.

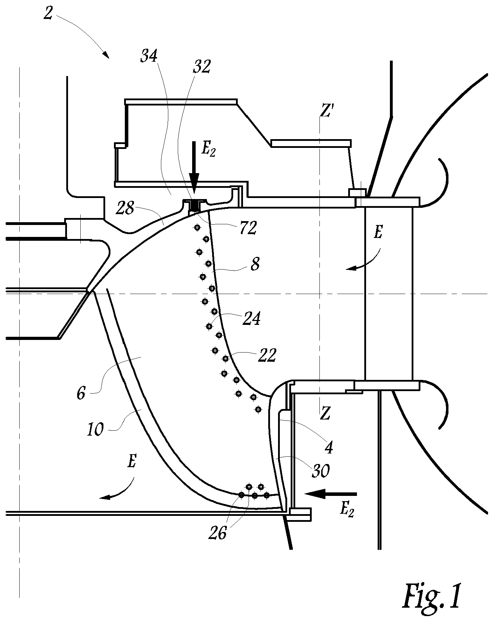

Sur la Fig. 1, on a représenté une turbine Francis 2 comprenant une roue 4 comprenant des aubes 6 disposées entre un plafond 28 et une ceinture 30.

Dans le cas d'une aube 6, il se pose un problème de création de cavitation sur le profil des aubes 6 de la roue 4 dans une zone au voisinage des arêtes d'entrée ou extrémité amont 8 et/ ou des arêtes de sortie ou extrémité aval 10 des aubes. Afin de palier cet inconvénient, l'aube 6, représentée sur la Fig. 1, comprend des conduites (non représentées) s'étendant à l'intérieur de l'aube entre une ouverture d'entrée 22 et une ouverture de sortie 24, 26. Les ouvertures d'entrée 22 des conduites sont disposées au voisinage de l'extrémité amont 8 de l'aube 6 de sorte à prélever un écoulement de l'écoulement principal E en amont de l'aube. Les ouvertures de sortie 24, 26 des conduites sont agencées pour injecter l'écoulement prélevé sur les parois latérales des aubes 6 au voisinage de l'extrémité amont 8 et/ou de l'extrémité aval 10 de l'aube 6. L'écoulement prélevé et injecté a pour effet de modifier localement l'écoulement principal E et d'éviter ainsi les phénomènes de formation de cavitation sur le profil les aubes. Certaines conduites comprennent donc une ouverture de sortie 24 débouchant dans une paroi latérale de l'aube 6 au voisinage de l'extrémité amont 8 afin d'éviter les phénomènes de formation de cavitation sur les aubes au voisinage de l'extrémité amont 8. D'autres conduites comprennent une ouverture de sortie 26 débouchant dans une paroi latérale de l'aube 6 au voisinage de l'extrémité aval 10 afin d'éviter les phénomènes de formation de cavitation sur les aubes au voisinage de l'extrémité amont 10.

Selon divers modes de réalisation, les ouvertures d'entrée et de sortie peuvent être disposées en série le long de l'extrémité amont 8 et de l'extrémité aval 10 de l'aube 6 selon une direction qui peut être perpendiculaire à la direction de l'écoulement principal E, comme représenté par les ouvertures de sortie 24 de la Fig. 1.

Selon un mode de réalisation particulièrement avantageux, des ouvertures de sortie sont disposées de sorte à déboucher dans l'extrémité aval 10 de l'aube 6 selon la direction de l'écoulement principal E. L'injection de l'écoulement prélevé dans l'extrémité aval permet de supprimer la zone tourbillonnaire qui se forme dans le sillage des aubes 6. L'écoulement prélevé est par exemple injecté dans le culot de l'extrémité avale 10 de l'aube 6.

Les aubes 6 de la roue 4 sont disposées entre un plafond 28 et une ceinture 30.

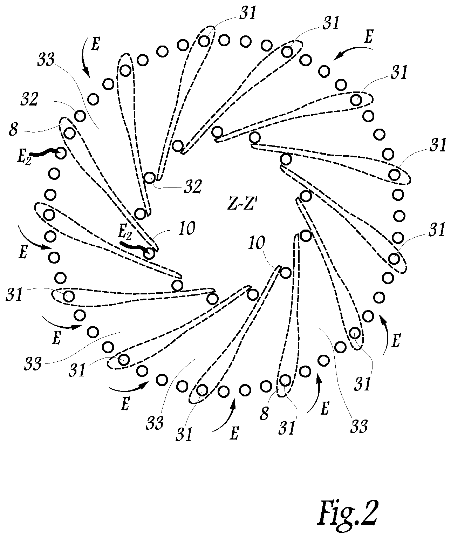

Selon l'invention, les phénomènes de cavitation sur les aubes sont empêchés par des ouvertures 31 pratiquées dans le plafond 28 au regard des aubes 6, comme représenté sur la Fig. 2. Ces ouvertures 31 communiquent avec les ouvertures de sortie 24 et 26 et avec les ouvertures de sortie débouchant dans l'extrémité aval 10 au moyen de canalisations non représentées. L'écoulement E₂ est prélevé de l'écoulement principal E alimentant la turbine Francis 2 en amont des aubes 6.. L'écoulement prélevé E₂, passant entre la partie fixe et les aubes mobiles de la turbine 2 puis passant dans un espace annulaire 34 situé au-dessus du plafond 28, peut par exemple être amené au moyen de conduites non représentées. Cet écoulement E₂ passe dans les ouvertures 31 puis est guidé vers les ouvertures de sortie 24, 26.

En plus, des phénomènes de cavitation sur les aubes, il peut également se produire des phénomènes de formation de vortex dans l'espace 33 entre les aubes 6. Ces phénomènes peuvent être palliés au moyen de conduites, dont les orifices d'entrée et de sortie sont disposées entre des extrémités amont et aval des aubes et débouchent dans l'espace 33 entre les aubes. Selon un mode de réalisation, le problème de formation d'un vortex entre les aubes 6 est résolu au moyen d'orifices 32 pratiqués dans le plafond 28, comme représenté sur la Fig. 1.

Dans ce mode de réalisation, l'écoulement E₂ prélevé dans l'espace annulaire 34 passe dans les ouvertures 32 et alimente les espaces 33 entre les aubes 6, comme représenté sur les Fig. 1 et 2. Les ouvertures 32 sont réparties dans le plafond 28 en regard des espaces 33 séparant les aubes 6. Ainsi, l'écoulement prélevé E₂ est injecté entre les aubes 6 et modifie les propriétés de l'écoulement E afin d'éviter les phénomènes de formation de vortex entre les aubes 6.

En variante, au lieu ou en plus de passer par le plafond 28, l'écoulement prélevé E₂ peut passer par la ceinture 30 au moyen d'ouvertures (non représentées) pratiquées dans celle-ci.

Les ouvertures 31, 32 pratiquées dans le plafond 28 et/ou la ceinture 30 permettent ainsi de pallier de façon simple à la fois aux problèmes de formation de zones de cavitation sur les aubes, de zones de formation de vortex entre les aubes et de tourbillons en aval des aubes.

Selon un mode de réalisation applicable à tous les moyens d'injection décrit ci-dessus, les moyens d'injection comprennent une soupape 72 disposée dans le trajet de l'écoulement prélevé, comme représenté sur la Fig 1. La soupape 72 est mobile entre une position ouverte dans laquelle elle laisse passer l'écoulement prélevé et une position fermée dans laquelle elle empêche le passage de l'écoulement prélevé. La soupape 72 est par exemple disposée au voisinage de chaque ouverture d'entrée des moyens d'injection et permet de commander de façon manuelle ou automatique l'injection de l'écoulement prélevé. Dans le cas de la turbine Francis, la soupape 72 est prévue au voisinage de chaque ouverture 32 ménagée dans le plafond 28.

Le mouvement de la soupape 72 est commandé par des moyens de commande (non représentés), mécaniques ou électriques de façon connue en soi. Ainsi, lors de régimes de fonctionnement de la machine hydraulique entraînant la formation de zones tourbillonnaires ou de pression réduite ou de cavitation, un automatisme ou un opérateur de la machine fait passer la ou les soupapes dans la position ouverte ce qui permet d'injecter l'écoulement prélevé dans lesdites zones et de prévenir la formation de ces zones, comme décrit ci-dessus.

Il convient de noter que l'écoulement prélevé n'est pas modifié par rapport à l'écoulement principal E, c'est-à-dire que l'eau ne subit pas d'opération de modification de sa composition au cours de l'écoulement prélevé.

## Revendications

1. Machine hydraulique de type Francis traversée par un écoulement (E) principal d'eau, comprenant une roue (4) d'une turbine, comprenant une pluralité d'aubes (6) disposées entre un plafond (28) et une ceinture (30), au voisinage de laquelle des zones tourbillonnaires, des zones de pression réduite ou des zones de cavitation (8, 10, 33) se forment le long du profil des aubes (6) au voisinage des extrémités amont (8) et des extrémités aval (10) des aubes (6) et entre les aubes (6), une pluralité d'ouvertures d'entrée (22) au voisinage de l'extrémité amont (8) des aubes pour prélever un écoulement dudit écoulement principal et une pluralité d'ouvertures de sortie (24, 26) au voisinage de l'extrémité amont (8) et de l'extrémité aval (10) des aubes (6) pour injecter l'écoulement prélevé de l'écoulement principal par la pluralité d'ouvertures d'entrée (22) dans lesdites zones (8, 10, 33) tourbillonnaire ou de pression réduite ou de cavitation de sorte à modifier localement l'écoulement principal (E) ou augmenter la pression dans ces zones (8, 10, 33), et d'autres ouvertures (31, 32) pratiquées dans ledit plafond (28) ou dans ladite ceinture (30) pour injecter un écoulement prélevé de l'écoulement principal entre les aubes (6) par d'autres ouvertures de sortie (31, 32).

2. Machine hydraulique selon la revendication 1, comprenant au moins une conduite reliant la pluralité d'entrées prélevant un écoulement (E₂) de l'écoulement principal (E) et la pluralité de sorties.

3. Machine hydraulique selon la revendication 2, comprenant une soupape (72) disposée au voisinage de chaque autre ouverture du plafond (28), ladite soupape (72) étant mobile entre une position ouverte dans laquelle elle laisse passer l'écoulement prélevé (E₂) de l'écoulement principal (E) par les ouvertures de sortie dans le plafond (28) et une position fermée dans laquelle elle empêche le passage de l'écoulement prélevé (E₂) par les ouvertures de sortie dans le plafond (28).

4. Machine hydraulique selon la revendication 3, **caractérisée en ce que** le mouvement de la soupape (72) est commandé par des moyens de commande.

5. Machine hydraulique selon l'une quelconque des revendications 1 à 4, dans laquelle l'écoulement prélevé passe également par la pluralité d'ouvertures de sortie au voisinage d'au moins une des extrémités amont et aval des aubes (6).

6. Machine hydraulique selon la revendication 5, dans laquelle l'écoulement prélevé (E₂) passe
par les ouvertures de sortie à la fois au voisinage de l'extrémité amont (8) et de l'extrémité aval (10) des aubes.

## Patentansprüche

1. Hydraulische Maschine vom Francis-Typ, welche von einem Hauptwasserfluss (E) durchquert wird, umfassend ein Rad (4) einer Turbine, umfassend mehrere Schaufeln (6), die zwischen einer Decke (28) und einem Riemen (30) angeordnet sind, in deren Nähe sich turbulente Zonen, Zonen mit vermindertem Druck oder Kavitationszonen (8, 10, 33) entlang dem Profil der Schaufeln (6) in der Nähe der stromaufwärtigen Enden (8) und der stromabwärtigen Enden (10) der Schaufeln (6) bilden, und zwischen den Schaufeln (6) mehrere Eintrittsöffnungen (22) in der Nähe des stromaufwärtigen Endes (8) der Schaufeln zur Entnahme eines Flusses des Hauptflusses und mehrere Austrittsöffnungen (24, 26) in der Nähe des stromaufwärtigen Endes (8) und des stromabwärtigen Endes (10) der Schaufeln (6) zur Einspritzung des dem Hauptfluss entnommenen Flusses durch die mehreren Eintrittsöffnungen (22) in den turbulenten Zonen oder Zonen mit vermindertem Druck oder Kavitationszonen (8, 10, 33), um lokal den Hauptfluss (E) zu modifizieren oder den Druck in diesen Zonen (8, 10, 33) zu erhöhen, und andere Öffnungen (31, 32), die in der Decke (28) oder in dem Riemen (30) angeordnet sind, zur Einspritzung eines dem Hauptfluss entnommenen Flusses zwischen den Schaufeln (6) durch die anderen Austrittsöffnungen (31, 32).

2. Hydraulische Maschine nach Anspruch 1, umfassend mindestens eine Leitung, welche die mehreren Eingänge zur Entnahme eines Flusses (E₂) aus dem Hauptfluss (E) und die mehreren Ausgänge verbindet.

3. Hydraulische Maschine nach Anspruch 2, umfassend ein Ventil (72), das in der Nähe jeder anderen Öffnung der Decke (28) angeordnet ist, wobei das Ventil (72) zwischen einer offenen Position, in der es den dem Hauptfluss (E) entnommenen Fluss (E₂) durch die Austrittsöffnungen in der Decke (28) hindurchlässt, und einer geschlossenen Position, in der es den Durchgang des entnommenen Flusses (E₂) durch die Austrittsöffnungen in der Decke (28) blockiert, bewegbar ist.

4. Hydraulische Maschine nach Anspruch 3, **dadurch gekennzeichnet, dass** die Bewegung des Ventils (72) von Steuermitteln gesteuert wird.

5. Hydraulische Maschine nach einem der Ansprüche 1 bis 4, wobei der entnommene Fluss auch durch die mehreren Austrittsöffnungen in der Nähe mindestens eines der stromaufwärtigen und stromabwärtigen Enden der Schaufeln (6) hindurchgeht.

6. Hydraulische Maschine nach Anspruch 5, wobei der entnommene Fluss (E₂) durch die Austrittsöffnungen in der Nähe des stromaufwärtigen Endes (8) und des stromabwärtigen Endes (10) der Schaufeln gleichzeitig hindurchgeht.

## Claims

1. Francis type hydraulic machine, through which a principal flow (E) of water passes, comprising a turbine wheel (4), comprising a plurality of blades (6) arranged between a ceiling (28) and a belt (30), in the vicinity of which swirling zones, reduced pressure zones or cavitation zones (8, 10, 33) form along the profile of the blades (6) in the vicinity of the upstream ends (8) and of the downstream ends (10) of the blades (6) and between the blades (6), a plurality of inlet openings (22) in the vicinity of the upstream end (8) of the blades for taking a flow from the said principal flow and a plurality of outlet openings (24, 26) in the vicinity of the upstream end (8) and of the downstream end (10) of the blades (6) for injecting the flow taken from the principal flow by the plurality of inlet openings (22) into the said swirling, reduced pressure or cavitation zones (8, 10, 33) so as to modify locally the principal flow (E) or to increase the pressure in these zones (8, 10, 33) and other openings (31, 32) formed in the said ceiling (28) or in the said belt (30) for injecting a flow, taken from the principal flow, between the blades (6) through other outlet openings (31, 32).

2. Hydraulic machine according to Claim 1, comprising at least one channel connecting the plurality of inlets taking a flow (E₂) from the principal flow (E) and the plurality of outlets.

3. Hydraulic machine according to Claim 2, comprising a valve (72) arranged in the vicinity of each other opening in the ceiling (28), the said valve (72) being movable between an open position in which it allows the flow (E₂) taken from the principal flow (E) to pass through the outlet openings in the ceiling (28) and a closed position in which it prevents the flow taken (E₂) from passing through the outlet openings in the ceiling (28).

4. Hydraulic machine according to Claim 3, **characterised in that** the movement of the valve (72) is controlled by control means.

5. Hydraulic machine according to any one of Claims 1 to 4, in which the flow taken also passes through the plurality of outlet openings in the vicinity of at least one of the upstream and downstream ends of the blades (6).

6. Hydraulic machine according to Claim 5, in which the flow taken (E₂) passes through the outlet openings in the vicinity of both the upstream end (8) and the downstream end (10) of the blades.
